**Europäisches Patentamt**

**European Patent Office**

**Office européen des brevets**

(11) Veröffentlichungsnummer: **0 416 403 A1**

# EUROPÄISCHE PATENTANMELDUNG

(21) Anmeldenummer: 90116304.8

(51) Int. Cl.5: **H01F 1/113**

(22) Anmeldetag: **25.08.90**

(30) Priorität: **07.09.89 DE 3929670**

(43) Veröffentlichungstag der Anmeldung:
**13.03.91 Patentblatt 91/11**

(84) Benannte Vertragsstaaten:
**DE FR GB**

(71) Anmelder: **BAYER AG**

**W-5090 Leverkusen 1 Bayerwerk(DE)**

(72) Erfinder: **Van Bonn, Karl-Heinz, Dr.**
**Vinngrabenstrasse 44**
**W-4130 Moers 1(DE)**
Erfinder: **Kathrein, Hendrik, Dr.**
**Gürtelweg 4**
**W-4053 Jüchen 1(DE)**
Erfinder: **Leitner, Lutz, Dr.**
**Mauritzstrasse 76**
**W-4150 Krefeld(DE)**
Erfinder: **Kiemle, Peter, Dr.**
**Bärenstrasse 53**
**W-4150 Krefeld 1(DE)**

(54) **Magnetische Eisenoxidpigmente, Verfahren zu ihrer Herstellung sowie deren Verwendung.**

(57) Beschichtete magnetische Eisenoxidpigmente, wobei, die Beschichtung ausschließlich aus P- und N-haltigen organischen Verbindungen besteht.

EP 0 416 403 A1

## MAGNETISCHE EISENOXIDPIGMENTE, VERFAHREN ZU IHRER HERSTELLUNG SOWIE DEREN VERWENDUNG

Die vorliegende Erfindung betrifft magnetische Eisenoxidpigmente mit verbesserter Dispergierbarkeit, Verfahren zu ihrer Herstellung sowie deren Verwendung.

Sowohl die speichertechnischen Eigenschaften eines magnetischen Aufzeichnungsträgers als auch die rasche Einarbeitung von Magnetpigmenten in eine Lackformulierung werden durch den Hauptbestandteil der Magnetschicht, nämlich das magnetische Pigment, maßgeblich beeinflußt. So sind die Fließeigenschaften des Lackes vor dem Beguß der Bänder durch die Oberflächeneigenschaften der verwendeten Pigmente abhängig.

Die Adsorptionsneigung der Bindemittelkomponenten an der Pigmentoberfläche läßt sich z.B. durch Adsorptionsisothermen beschreiben. Quantitative Maßzahlen zur Be schreibung der Bindemittelaffinität an eine Pigmentoberfläche werden z.B. mittels Durchflußmikrokalorimetrie, im Reaktionskalorimeter, durch Bestimmung des Zetapotentials oder gravimetrisch durch Rückwägung der nicht adsorbierten Anteile ermittelt.

Dabei werden nicht nur große Unterschiede von Pigmentklasse zu Pigmentklasse, wie z.B. zwischen $\gamma$-$Fe_2O_3$, bertholliden Eisenoxidphasen zwischen Maghämit und Magnetit, $Fe_3O_4$, Co-Ferrit, $CrO_2$ oder Metallpulver, gefunden, sondern teilweise bereits innerhalb einer Pigmentklasse.

Unterschiedliche Adsorptionsverhalten der magnetischen Pigmente wirken sich nicht nur auf die Bindemittelkomponente, sondern auch auf die niedermolekularen Rezepturbestandteile aus und beeinflussen damit auch die mechanischen Oberflächen- und Laufeigenschaften des fertigen Bandes. Daraus folgt, daß möglichst keine rezepturfremden Bestandteile als Dispergier- und Benetzungsmittel eingesetzt werden sollten.

Beim Einsatz eines oder mehrerer Dispergatoren muß zur Verbesserung der Fließeigenschaften des Magnetlackes darauf geachtet werden, daß die zur Verbesserung der Laufeigenschaften zugesetzten Fettsäuren sowie die Vernetzerkomponenten nicht mit ihnen in Konkurrenzadsorption treten. Dadurch wird einmal eine optimale Benetzung der Primärteilchen durch den oder die Dispergierhilfsstoffe verhindert und darüber hinaus die Reibung der Teilchen aneinander erhöht.

Durch die gezielte Einstellung der Oberflächenchemie des magnetischen Pigmentes lassen sich somit Adsorption/Desorption der hoch- und niedermolekularen Rezepturkomponenten, die Zeitabhängigkeit des Gleitmittelhaushaltes wie die physikalische und chemische Vernetzung der Bindemittelkomponentsn beeinflussen.

So wird in der NL-A 7706-922 eine Beschichtung von Magnetpigmenten mit einer monomolekularen Schicht aus Lecithin beschrieben, das aus organischem Lösungsmittel auf die Pigmentoberfläche ausgefällt wird. Damit werden die Dispergiereigenschaften von Magnetpigmenten verbessert, jedoch wird das durch mehrstufige Reinigung erhaltene Lecithin während einer Mahlung in organischer Phase auf die Pigmentoberfläche aufgebracht und in situ mit den übrigen Rezepturbestandteilen weiterverarbeitet. Die Verwendung von monomolekular beschichteten Pigmenten führt jedoch zu erheblichen Rezepturbeeinflüssungen, die mit steigenden Oberflächen alle Oberflächen- und Bandlaufeigenschaften beeinträchtigen.

In JP-A 62087-237 wird unter anderem der Zusatz von Lecithin zu anorganischen Pigmenten in Verbindung mit einer Strahlmahlung beschrieben, dabei wird das Lecithin durch Gasphasenadsorption während einer Strahlmahlung auf die verschiedensten Oberflächen von Farbpigmenten aufgebracht und deren Zerteilbarkeit verbessert. Eine Verwendung für Magnetpigmente ist dabei jedoch nicht vorgesehen. Desgleichen werden in der US-A 4 303 749 Toner-Pigmente beschrieben, die u.a. Lecithin als oberflächenaktive Substanz besitzen können. Auch hier wird der Dispergator aus einem organischen Lösungsmittel aufgebracht.

Aufgabe dieser Erfindung ist die Bereitstellung von magnetischen Eisenoxidpigmenten, die die beschriebenen Nachteile nicht aufweisen.

Es wurde überraschenderweise gefunden, daß sich die Fließeigenschaften eines Magnetlackes deutlich verbessern lassen, wenn als magnetisches Pigment ein Eisenoxid mit einer Oberflächenbelegung mit N- und P-haltige organischen Molekülen belegt ist. Derartige Verbindungen wirken sich nicht auf den pH-Wert der damit belegten Pigmente aus.

Gegenstand dieser Erfindung sind somit beschichtete Eisenoxidpigmente mit einer ausschließlichen Beschichtung aus P- und N-haltigen Substanzen.

Dabei ist besonders überraschend, daß bereits mit weit weniger als einer monomolekularen Oberflächenbelegung eine hervorragende Verbesserung der Verarbeitungseigenschaften so belegter Magnetpigmente erreicht werden kann.

Als N-P-haltige organische Moleküle kommen Verbindungen wie Kephaline, Lecithine und andere polare Lipide, infrage. Ihre Reinheit ist von untergeordneter Bedeutung, solange eine intramolekulare Salzbildung gewährleistet ist.

Dabei zeigte sich die vorteilhafte Wirkung unabhängig davon, ob die erfindungsgemäße Oberflächenbelegung auf einem gamma-$Fe_2O_3$-Pigment, einem bertholliden, einem epitaxialen oder mit Cobalt volumendotiertem Eisenoxidpigment aufgebracht ist.

Bevorzugt beträgt der Gehalt an P- und N-haltiger organischer Verbindung 0,1 bis 5 Gew.-%, vorzugsweise 0,1 bis 1 Gew.-%, bezogen auf das Pigment.

Die Sohwierigkeit der gleichmäßigen Applikation so geringer Mengen auf großen Oberflächen kann vorteilhaft durch Einsatz von wäßrigen Dispersionen gelöst werden. Selbst geringste Menge von 0,1 bis 1 Gew.-% können so gleichmäßig verteilt werden.

Lecithine sind auch deshalb besonders vorteilhaft, da sie bereits vielfach Rezepturbestandteile darstellen. Es ist besonders überraschend, daß die erfindungsgemäß auf das Pigment aufgebrachte Menge an oberflächenaktiver Substanz bereits eine optimale Wirkung besitzt, wenn es in einem Bruchteil der einer Rezeptur zugesetzten Menge verwendet wird.

Gegenstand dieser Erfindung ist auch ein Verfahren zur Herstellung der erfindungsgemäßen Pigmente. Dies ist dadurch gekennzeichnet, daß eine P- und N-haltige organische Verbindung in einem pH-Bereich von 3 bis 10, vorzugsweise 6 bis 8, aus wäßriger Lösung durch Adsorption aufgebracht wird. Hierzu wird beispielsweise das Eisenoxidpulver in Wasser dispergiert. Anschließend wird Lecithin als wäßrige Emulsion im pH-Bereich von 5 bis 10, vorzugsweise im Neutralbereich zwischen pH 6 und 8, zugegeben. Die Gew.-Anteile an Lecithin können dabei zwischen 0,1 und 5 %, bezogen auf das eingesetzte Magnetpigment, variieren. Die Temperatur sollte dabei 0°C nicht unterschreiten und 100°C nicht überschreiten. Vorzugsweise wird zwischen 25 und 40°C gearbeitet. In der Nachrührphase von 1 bis 2 Stunden wird das Lecithin quantitativ von der Pigmentoberfläche adsorbiert. Das auf diese Weise beschichtete Magnetpigment wird filtriert, gewaschen und schließlich getrocknet.

Anschließend kann das Magnetpigment entsprechend bisher bekannten Verfahren z.B. mit Schlagkranzmühlen oder Zahnscheibenmühlen gemahlen werden, wobei die beim Pigmentherstellungsprozeß entstandenen Aggregate bzw. Agglomerate zerteilt werden. Dabei fallen Produkte mit Schüttdichten von $\leq$ 0,5 g/cm$^3$ an. Die Magnetpigmente können anschließend zur Erhöhung der Schüttdichte auf einem Walzenstuhl auf ein Schüttgewicht von ca. 0,7 g/cm$^3$ verdichtet werden.

Das erfindungsgemäße Pigmentpulver wird bevorzugt anschließend in einer geeigneten Menge Lösemittel, einer geeigneten Menge des Dispergierhilfsmittels Lecithin, wobei die bereits auf der Pigmentoberfläche aufgebrachte Lecithin-Menge berücksichtigt wird, und einer Bindemittelmischung intensiv vermischt und einer Vordispergierung unterzogen, was z.B. an einem Dissolver, einem Kneter, einer Kolloidmühle, einer Kugelmühle oder anderen hochscherenden Aggregaten durchgeführt werden kann.

Eine Feindispergierung kann beispielsweise in einer Perlmühle erfolgen, deren Mahlintensität durch Variation der Mahlkörpergröße und -füllung, der Drehzahl und des Lackdurchsatzes gesteuert werden kann.

Um eine möglichst enge Pigmentverteilungsbreite zu erhalten, sollte vorzugsweise die magnetische Dispersion in mehreren Passagen von einem ersten Vorratsgefäß über eine oder mehrere beispielhaft genannte Perlmühlen in ein zweites Vorratsgefäß gefahren werden.

Nach Abschluß dieser Feindispergierstufe können gegebenenfalls die restlichen Bindemittelanteile oder Additive der magnetischen Dispersion zugemischt werden.

Die anschließende Beschichtung des unmagnetischen Schichtträgers mit der Magnetdispersion erfolgt entsprechend dem Stand der Technik, z.B. mittels Reverse-Roll-Coater, Rasterdruck-, Extrudergießer.

Als Schichtträger können Folien aus Polyester wie Polyethylenterephthalat, Polyolefine wie Polypropylen, Cellulosederivate wie Triacatet, Polycarbonate oder starre Schichtträger aus nichtmagnetischen Metallen wie Aluminium oder keramische Materialien eingesetzt werden.

Die weitere Bearbeitung der beschichteten Materialien, wie die Oberflächenglättung durch Kalandern, Schneiden und Konfektionieren, erfolgt in bekannter Weise.

Gegenstand dieser Erfindung ist somit auch die Verwendung der erfindungsgemäßen magnetischen Eisenoxidpigmente zur Herstellung magnetischer Aufzeichnungsmedien.

Im folgenden wird die Erfindung beispielhaft beschrieben, ohne daß hier eine Einschränkung zu sehen ist.

Aufgrund des strukturviskosen und thioxtropen Verhaltens ist für die Bestimmung der Viskosität eines Magnetlackes eine genaue Festlegung und Einhaltung der Meßbedingungen erforderlich. Gemessen werden die Lackviskositäten mit einem Rotationsviskosimeter der Firma Brookfield (Typ RV TD) bei 20°C nach einer Scherzeit von 2 min., wobei die Umdrehungszahl der Spindel (Typ C) 10 Umdrehungen pro Minute beträgt.

Beispiel 1

70 kg eines cobaltbeschichteten Magnetpigmentes ($_i H_c$ = 53,3 kA/m, BET-Oberfläche = 29 m²/g; FeO = 6,9 %) werden in 350 l Wasser dispergiert. Unter Rühren werden innerhalb von 60 Minuten 0,3 Gew.-% Lecithin, bezogen auf eingesetztes Magnetpigment, in Form einer 10 %igen wäßrigen Emulsion zugegeben. Der pH-Wert liegt dabei zwischen 6 und 8. Im Anschluß an eine Nachrührphase von 60 Minuten erfolgt die Aufarbeitung durch Filtration, Waschung und Trocknung.

Das derart hergestellte Magnetpigment wird in eine Magnetlackrezeptur folgender Zusammensetzung eingearbeitet:

```
                                                    Gew.-Teile
Methylethylketon  )                                    27,8
Cyclohexanon       )Lösungsmittelgemisch               15,2
Toluol             )                                    7,6
Bindemittel 1
(Vinylite VAGF von
Union Carbide, USA: Ein Vinylcopolymer mit             2,0
durchschnittlichem Molekulargewicht von 35.000
und 1,8 % Hydroxylgruppen
Bindemittel 2
(Morthane CA 128 von
Morthane Chem. Comp. USA: Lineares Polyurethan         4,8
mit endständigen Hydroxylgruppen (0,12 %)
Laurinsäure, Handelsprodukt Merck                      0,9
Lecithin, Lipopur®, Lucas Meyer                  0,82/0,9¹⁾
Leitfähigkeitsruß
(Black Pearls 2000 von Cabot Corp. USA:                0,7
Chrom(III)-oxid GN/M der Bayer AG                       0,7
Isocyanat
(Desmodur L 75 von Bayer AG) )Vernetzer-               1,5
Methylethylketon             )lösung                   1,5
Magnetpigment                                          26,4
```

¹⁾ Die Lackpräparationen der Beispiele 1 bis 3 werden mit der niedrigeren Lecithin-Einstellung gefahren, die die Oberflächenbelegung mit Lecithin berücksichtigt, während die Anreibungen der Vergleichsbeispiele 1 bis 3 mit der höheren Lecithin-Einstellung durchgeführt werden.

Zu Beginn werden das Magnetpigment und die Rezepturbestandteile mit Ausnahme von Bindemittel 2 in 40 Gew.-% des Lösungsmittelgemisches 15 Minuten an einem Labordissolver vordispergiert. Vor dem ersten Mahldurchgang werden weitere 15 Gew.-% des Lösungsmittelgemisches untergemischt. Die restlichen 45 Gew.-% werden zusammen mit dem Bindemittel 2 als let down nach dem fünften Mahldurchgang zugegeben. Nach dem siebten Mahldurchgang erfolgt schließlich die Zugabe von Desmodur L 75.

Die Lackviskositäten werden nach jedem Mahldurchgang bestimmt und sind in der Tabelle weiter unten aufgeführt.

Beispiel 2

Es wird wie in Beispiel 1 verfahren; jedoch wird das oberflächenbehandelte Magnetpigment einer Trockenmahlung auf einer Zahnscheibenmühle unterworfen und im Anschluß daran auf die in Beispiel 1 beschriebene Art und Weise in die Magnetlackrezeptur eingearbeitet.

Beispiel 3

Es wird wie in Beispiel 1 verfahren; jedoch wird das oberflächenbehandelte Magnetpigment in der Schlagkranzmühle gemahlen und sein Schüttgewicht durch Vakupress auf 0,7 g/cm³ eingestellt. Bei der Lackeinarbeitung wird wie in Beispiel 1 vorgegangen.

Vergleichsbeispiel 1

Es wird wie in Beispiel 1 verfahren; jedoch wird auf die Oberflächenbelegung mit Lecithin verzichtet.

Vergleichsbeispiel 2

Es wird wie in Beispiel 2 verfahren; jedoch wird auf die Oberflächenbelegung mit Lecithin verzichtet.

Vergleichsbeispiel 3

Es wird wie in Beispiel 3 verfahren; jedoch wird auf die Oberflächenbelegung mit Lecithin verzichtet.

Die in der nachstehenden Tabelle aufgelisteten Daten zeigen, daß sich durch Einsatz der in Beispiel 1 bis 3 beschriebenen Produkte die Viskosität des Lackansatzes deutlich erniedrigen läßt, woraus für den Hersteller von Magnetbändern verarbeitungstechnische Vorteile durch die Einsparung von Lösungsmittel und niedrigere Naßfilmstärken resultieren.

| Viskosität ($10^3$ mPa.s) als Funktion der Mahldurchgänge | | | | | | | | | |
|---|---|---|---|---|---|---|---|---|---|
| | $\rho$ Stampf. (g/cm³) | Mahldurchgänge | | | | | | | |
| | | 1 | 2 | 3 | 4 | 5[1] | 6 | 7 | |
| Beispiel 1 | 0,63 | 8,6 | 6,8 | 6,4 | 5,4 | 4,4 | 4,3 | 4,4 | |
| Beispiel 2 | 0,47 | 12,0 | 9,2 | 9,0 | 9,1 | 9,6 | 4,8 | 4,9 | |
| Beispiel 3 | 0,73 | 10,7 | 8,8 | 8,5 | 8,4 | 8,4 | 5,8 | 4,9 | |
| Vergleichsbeispiel 1 | 0,73 | 13,5 | 13,8 | 14,3 | 14,2 | 13,8 | 4,5 | 4,8 | |
| Vergleichsbeispiel 2 | 0,53 | 12,6 | 10,7 | 12,9 | 11,1 | 11,0 | 4,9 | 4,1 | |
| Vergleichsbeispiel 3 | 0,71 | 13,3 | 13,6 | 16,8 | 16,0 | 14,7 | 5,4 | 5,0 | |

[1] Im Anschluß an die fünfte Passage erfolgt der let down.

**Ansprüche**

1. Beschichtete magnetische Eisenoxidpigmente, dadurch gekennzeichnet, daß die Beschichtung ausschließlich aus P- und N-haltigen organischen Verbindungen besteht.
2. Magnetische Eisenoxidpigmente gemäß Anspruch 1, dadurch gekennzeichnet, daß die P- und N-haltige organische Verbindung ein Lecithin ist.
3. Magnetische Eisenoxidpigmente gemäß einem der Ansprüche 1 oder 2, dadurch gekennzeichnet, daß der Gehalt an P- und N-haltiger organischer Verbindung 0,1 bis 5 Gew.-%, vorzugsweise 0,1 bis 1 Gew.-%, bezogen auf das Pigment, beträgt.
4. Magnetische Eisenoxidpigmente gemäß einem oder mehrerer der Ansprüche 1 bis 3, dadurch gekennzeichnet, daß das Eisenoxidpigment Cobalt-oberflächenbeschichtet ist.

5. Magnetische Eisenoxidpigmente gemäß einem oder mehrerer der Ansprüche 1 bis 4, dadurch gekennzeichnet, daß das Eisenoxidpigment ein $\gamma$-$Fe_2O_3$-Pigment ist.

6. Magnetische Eisenoxidpigmente gemäß einem oder mehrerer der Ansprüche 1 bis 4, dadurch gekennzeichnet, daß das Eisenoxidpigment ein berthollides Eisenoxidpigment ist.

7. Magnetische Eisenoxidpigmente gemäß einem oder mehrerer der Ansprüche 1 bis 4, dadurch gekennzeichnet, daß das Eisenoxidpigment Cobalt-volumendotiert ist.

8. Verfahren zur Herstellung magnetischer Eisenoxidpigmente gemäß einem oder mehrerer der Ansprüche 1 bis 7, dadurch gekennzeichnet, daß die P- und N-haltige organische Verbindung in einem pH-Bereich von 3 bis 10, vorzugsweise 6 bis 8, aus wäßriger Emulsion durch Adsorption aufgebracht wird.

9. Verwendung der magnetischen Eisenoxidpigmente gemäß einem oder mehrerer der Ansprüche 1 bis 8 zur Herstellung magnetischer Aufzeichnungsmedien.

EP 90116304.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| A | <u>JP - A - 2-3 431</u><br>(KONIOSHIROKU)<br>  * Zusammenfassung *<br>    -- | 1-9 | H 01 F 1/113 |
| A | <u>DE - A1 - 3 211 327</u><br>(BAYER)<br>  * Zusammenfassung; Patentansprüche 1-10 *<br>    -- | 1-9 | |
| P,A | <u>EP - A2/A3 - 0 332 990</u><br>(BAYER)<br>  * Zusammenfassung *<br>    -- | 1-9 | |
| D,A | <u>NL - A - 7 706 922</u><br>(SONY)<br>  * Patentansprüche 1-10 *<br>    -- | 1-9 | |
| D,A | <u>US - A - 4 303 749</u><br>(GRUBER)<br>  * Zusammenfassung *<br>    ---- | 1-9 | |

| RECHERCHIERTE SACHGEBIETE (Int. Cl⁵) |
|---|
| H 01 F 1/00 |

Der vorliegende Recherchenbericht wurde für alle Patentansprüche erstellt.

| Recherchenort | Abschlußdatum der Recherche | Prüfer |
|---|---|---|
| WIEN | 23-11-1990 | VAKIL |